# EUROPEAN PATENT APPLICATION

(11) **EP 2 919 041 A2**
(43) Date of publication of application: **16.09.2015**
(21) Application number: 15157671.7
(22) Date of filing: 04.03.2015
(51) Int. Cl.: G01V 3/08, G01V 3/15, G01V 15/00

(54) **OBJECT POSITIONING SYSTEM AND DEVICE THEREOF**

(30) Priority: 05.03.2014 TW 103107549
(71) Applicant: Cheng, Cheng-Ge, 104 Taipei City (TW)
(72) Inventor: Cheng, Cheng-Ge, 104 Taipei City (TW)
(74) Representative: Lang, Christian

(57) **Abstract**

An object positioning system includes an object positioning device and a detecting device. The object positioning device includes at least a magnetic bar forming a marked magnetic field. The detecting device includes a magnetic field generating unit for outputting a detecting magnetic field according to a detecting signal in an electromagnetic conversion process, and an analyzing unit for detecting whether the detecting signal varies when the detecting magnetic field passes the marked magnetic field along a moving direction. The analyzing unit analyzes whether a character of the variation corresponds to the marked magnetic field and accordingly outputs a detecting result. When people are trapped under snow or collapsed buildings because of an avalanche or an earthquake, the system can be utilized to find out trapped people. The system can also be utilized to find out objects buried underground. Money and time consumed by mass excavation can be saved.

## Description

### BACKGROUND

### Technical Field

The instant disclosure relates to an object positioning system, and more particularly, to an object positioning system capable of positioning by detecting variations of magnetic lines of force.

### Related Art

Although having developed so many technologies and evolved so fast, mankind living on Earth still has difficulty to predict the occurrence of nature phenomena such as avalanches or earthquakes. When an avalanche or an earthquake occurs, people have no choice but suffer from it. Survivors buried under snow or collapsed buildings are hard to be found. Rescue crews have to blindly dig everywhere to try to find out people trapped underground. This traditional dig-to-find method is less efficient and also wastes manpower and resources. The longer the rescue operation takes the less likelihood there is of finding the trapped people alive.

In order to get the trapped people out as soon as possible and manage to find them alive, products such as devices capable of automatically emitting electric waves for help or life detectors are available on the market. However, when power supply sources of the devices such as batteries run out of power, the devices cannot emit electric waves anymore. If the trapped people are buried too deep, the life detectors cannot detect them. In the circumstances, even rough locations of the trapped people are hard to be located in time by using these products. Rescue crews have to keep searching by the traditional method, and this is just like looking for a needle in a haystack. The searching method lacks efficiency; consequently, the chances of rescuing the trapped people alive in the golden time become less.

Furthermore, in a situation that an object such as a joint of water pipe sleeves is buried underground, the ways to find out the object are either locating it by checking the original construction drawings or just digging it out by mass excavation. Either way costs a lot of money and time, and causes pollution issues. For example, the disposal of the excavated spoil is a serious issue and may pollute environment.

### SUMMARY

To address the above issue, the instant disclosure provides an object positioning system, and more particularly, an object positioning system capable of positioning by detecting variations of magnetic lines of force. Problems of prior art, for example, batteries of devices capable of automatically emitting electric waves for help run out of power, and life detectors are hard to detect weak signals, can be solved by the instant disclosure. In the meantime, locating an object such as a joint of water pipe sleeves buried underground is easier, and money and time for searching the object are less.

According to an embodiment of the instant disclosure, an object positioning system comprises an object positioning device and a detecting device.

The object positioning device comprises at least a magnetic bar forming a marked magnetic field. The detecting device comprises a magnetic field generating unit for outputting a detecting magnetic field according to a detecting signal in an electromagnetic conversion process, and an analyzing unit for detecting whether the detecting signal varies when the detecting magnetic field passes the marked magnetic field along a moving direction. The analyzing unit analyzes whether a character of the variation of the detecting signal corresponds to the marked magnetic field and accordingly outputs a detecting result.

Since the object positioning device of the object positioning system is composed of the magnetic bars. A magnetic field can be automatically generated because of the inherent properties of magnetism of the magnetic bars; therefore, the problem of running out of power no longer exists. The automatically generated magnetic field outputs signals with steady and continuous energy. The problem that signals are too weak to be detected by life detectors is solved, too. The magnetic bars are arranged to form the marked magnetic field which has a specific design and is easy to be distinguished from other objects. As a result, process of signal detecting become easier when rescue crews or construction crews look for people or objects underground.

The features of the instant disclosure will no doubt become understandable to those of ordinary skill in the art after reading the following detailed description of the preferred embodiment that is illustrated in the various figures and drawings.

### BRIEF DESCRIPTION OF THE DRAWINGS

FIG. 1A illustrates a first schematic diagram of using an object positioning system according to a first embodiment of the instant disclosure;
FIG. 1B illustrates a second schematic diagram of using the object positioning system according to the first embodiment of the instant disclosure;
FIG. 2 illustrates a schematic block diagram of the object positioning system according to the first embodiment of the instant disclosure;
FIG. 3A illustrates a top view of a first object positioning device of the object positioning system according to the first embodiment of the instant disclosure;
FIG. 3B illustrates a top view of a second object positioning device of the object positioning system according to the first embodiment of the instant disclosure;
FIG. 3C illustrates a top view of a third object positioning device of the object positioning system according to the first embodiment of the instant disclosure;
FIG. 4 illustrates a top view of a first object positioning device of an object positioning system according to a second embodiment of the instant disclosure;
FIG. 5 illustrates a top view of a second object positioning device of the object positioning system according to the second embodiment of the instant disclosure;
FIG. 6 illustrates a top view of a third object positioning device of the object positioning system according to the second embodiment of the instant disclosure;
FIG. 7A illustrates a first arrangement of an object positioning device of the object positioning system according to the second embodiment of the instant disclosure;
FIG. 7B illustrates a second arrangement of an object positioning device of the object positioning system according to the second embodiment of the instant disclosure;
FIG. 8A illustrates a first arrangement of an object positioning device of an object positioning system according to a third embodiment of the instant disclosure;
FIG. 8B illustrates a second arrangement of an object positioning device of the object positioning system according to the third embodiment of the instant disclosure;
FIG. 9A illustrates a perspective view of a first object positioning device of an object positioning system according to a fourth embodiment of the instant disclosure;
FIG. 9B illustrates a perspective view of a second object positioning device of the object positioning system according to the fourth embodiment of the instant disclosure;
FIG. 10 illustrates a side view of an object positioning device of the object positioning system according to the fourth embodiment of the instant disclosure;
FIG. 11A illustrates a first arrangement of an object positioning device of an object positioning system according to a fifth embodiment of the instant disclosure;
FIG. 11B illustrates a second arrangement of an object positioning device of the object positioning system according to the fifth embodiment of the instant disclosure;
FIG. 12A illustrates a first arrangement of an object positioning device of an object positioning system according to a sixth embodiment of the instant disclosure; and
FIG. 12B illustrates a second arrangement of an object positioning device of the object positioning system according to the sixth embodiment of the instant disclosure.

### DETAILED DESCRIPTION

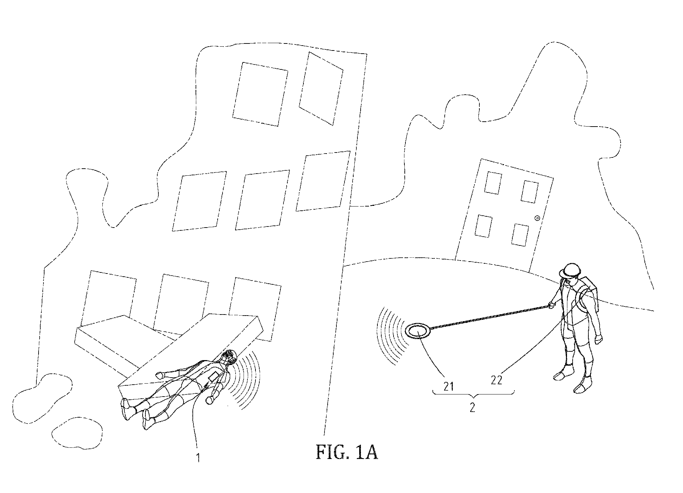

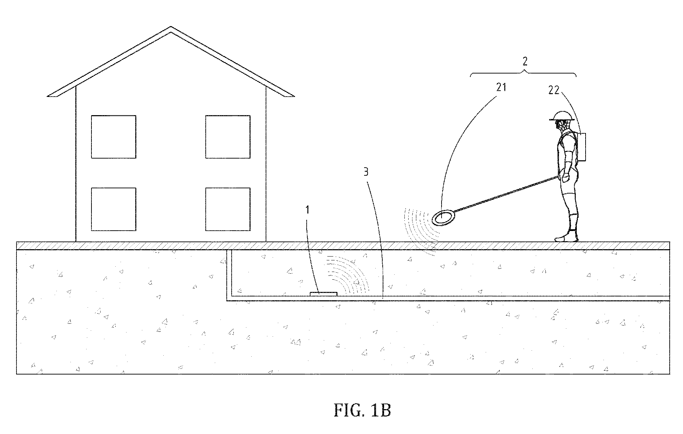

Referring to FIG. 1A and FIG. 1B, FIG. 1A and FIG. 1B respectively illustrate schematic diagrams of using an object positioning system according to a first embodiment of the instant disclosure. The object positioning system comprises an object positioning device 1 and a detecting device 2. The detecting device 2 comprises a magnetic field generating unit 21 and an analyzing unit 22. As shown in FIG. 1A, a person is trapped under snow or collapsed buildings because of an avalanche or an earthquake, and a rescue crew arrives the scene of accident and uses the detecting device 2 for searching. When the rescue crew closes to the trapped people, magnetic fields which are generated by the magnetic field generating unit 21 of the detecting device 2 are going to be interfered by a marked magnetic field formed by magnetic bars 11 arranged in a specific arrangement of the object positioning device 1. The magnetic fields are going to vary and bring a character of a variation. The analyzing unit 22 is going to analyze and verify the character of the variation so as to further locate the location of the trapped people. The object positioning device 1 can be mounted to clothes or personal belongings such as backpacks, bag suspenders, and water bottles. As shown in FIG. 1B, a construction crew is using the detecting device 2 for detecting an object buried underground (e.g., a joint of water pipe sleeves of water pipes 3).

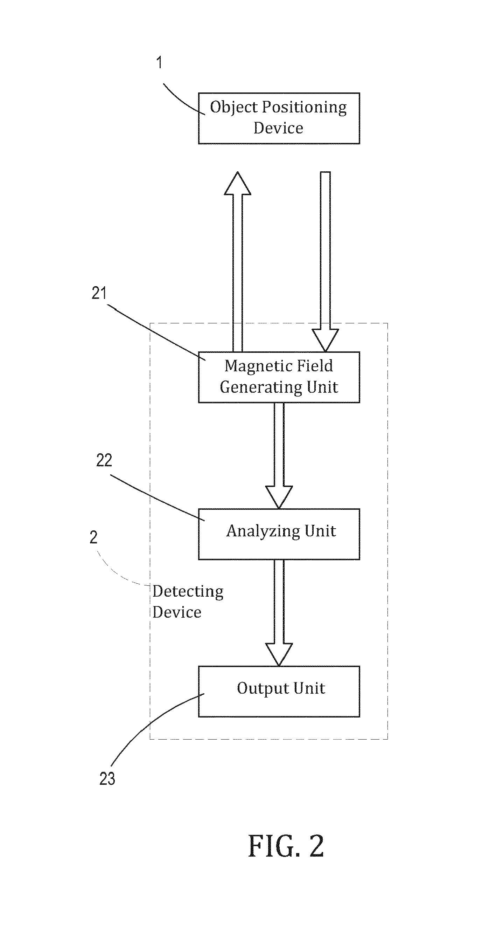

Referring to FIG. 2, FIG. 2 illustrates a schematic block diagram of the object positioning system according to the first embodiment of the instant disclosure. The object positioning system comprises the object positioning device 1 and the detecting device 2. The detecting device 2 comprises the magnetic field generating unit 21, the analyzing unit 22, and an output unit 23. The magnetic field generating unit 21 outputs a detecting magnetic field according to a detecting signal in an electromagnetic conversion process. When the magnetic field generating unit 21 closes to the object positioning device 1, the detecting magnetic field is going to be interfered by the marked magnetic field formed by the magnetic bars 11 of the object positioning device 1, and is going to have the detecting signal vary to bring a character of a variation. The analyzing unit 22 can analyze the character of the variation of the detecting signal to determine whether the variation is caused by the marked magnetic field formed by the arrangement of the magnetic bars 11. For example, the analyzing unit 22 can analyze variations of intensity, frequency domain, or phase of the detecting signal and then compares the analyzed variations (character of variation) with pre-stored character data previously stored in a character database, so that the analyzing unit 22 can find out whether the character of the variation matches the pre-stored character data to determine whether the character of the variation is brought by the interference of the marked magnetic field formed by the magnetic bars 11. If the character of the variation matches the pre-stored character data, the analyzing unit 22 can further calculate the location of the marked magnetic field and the distance thereto. Therefore, the crew can identify where the object positioning device 1 is. The analyzing unit 22 accordingly generates a detecting result and transmits the detecting result to the output unit 23. The output unit 23 is going to output a sound, a light signal, or a displayed massage according to the detecting result. The sound, the light signal, or the displayed massage outputted by the output unit 23 can be solo or be generated respectively. The purpose is to alert rescue/construction crews so that they won't omit to notice the character of the variation brought by the interference of the marked magnetic field formed by magnetic bars 11, because the scenes of rescue/construction are usually full of noises and have not enough light. As a result, the location of the object positioning device 1 can be effectively located, and the time consumed by digging blindly can be significantly saved. Further, the trapped people can be rescued soon enough in the golden time. Also, a lot of money and time consumed by mass excavation for finding out objects buried underground can be saved, and the pollution of environment can be reduced

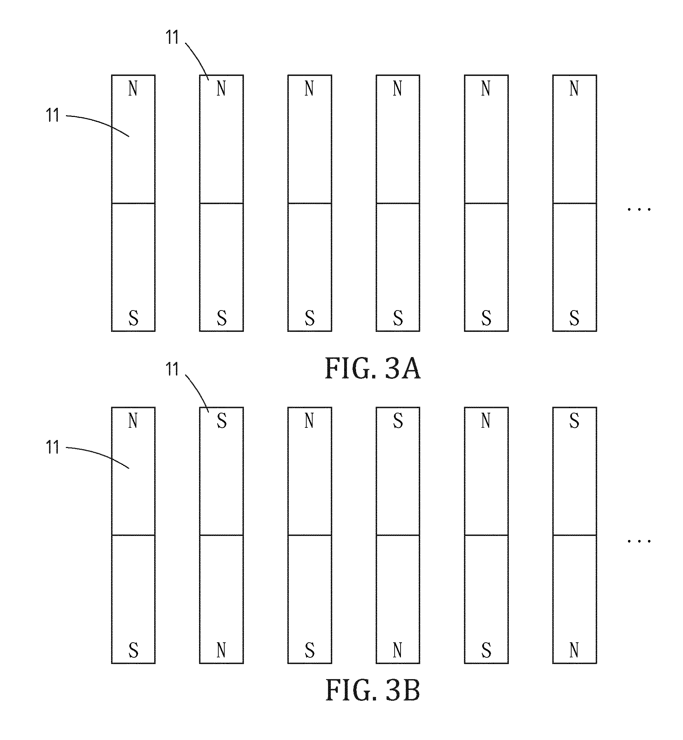

Referring to FIG. 3A to FIG. 3C, FIG. 3A to FIG. 3C respectively illustrate top views of object positioning devices 1 having different arrangements of the object positioning system according to the first embodiment of the instant disclosure. The object positioning device 1 comprises a plurality of magnetic bars 11 parallel to and arranged in a plane. The magnetic bars 11 are arranged to form a marked magnetic field and to have a geometric form. The geometric form is, but is not limited to, a rectangular form. In another embodiment, the length of each magnetic bar 11 increases along the array of the magnetic bars 11. Accordingly, the magnetic bars 11 form a marked magnetic field having a trapezoid form. In the embodiment, the magnetic bars 11 are enclosed by clothes or other filling materials.

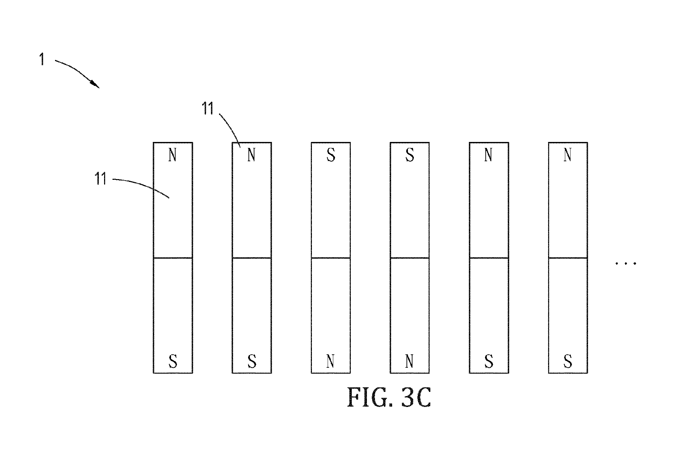

In an embodiment, as shown in FIG. 3A, the same poles (e.g., the N poles) of the magnetic bars 11 face toward the same direction. In an embodiment, as shown in FIG. 3B, the same poles of adjacent magnetic bars 11 face toward opposite directions. In an embodiment, as shown in FIG. 3C, a number of adjacent magnetic bars 11 are set in a group. The same poles of the magnetic bars 11 in a same group face toward the same direction. The same poles of the magnetic bars 11 in the adjacent groups face toward opposite directions. The arrangements of the magnetic bars 11 aforementioned are, but are not limited to, merely examples. Furthermore, in another embodiment, the object positioning device comprises only a magnetic bar. The magnetic bar forms a marked magnetic field. For example, the magnetic bar has such a particular shape (e.g., a particular length between two poles thereof) that the marked magnetic field can be formed according to the particular shape. The analyzing unit of the detecting device can still detect whether the detecting signal varies when the detecting magnetic field passes the marked magnetic field along a moving direction. Then the analyzing unit analyzes whether a character of the variation of the detecting signal corresponds to the marked magnetic field and accordingly outputs a detecting result. In yet another embodiment, the detecting device comprises only an analyzing unit. The analyzing unit can directly detect the marked magnetic field and accordingly output a detecting result. For example, if a rescue crew with the detecting device approaches to an object positioning device with at least a magnetic bar, the analyzing unit can detect a marked magnetic field of the object positioning device and then compare the marked magnetic field with pre-stored marked magnetic field data previously stored in a database. Consequently, the analyzing unit can find out that the detected marked magnetic field matches the pre-stored marked magnetic field data and output a detecting result informing the crew that the object positioning device is nearby.

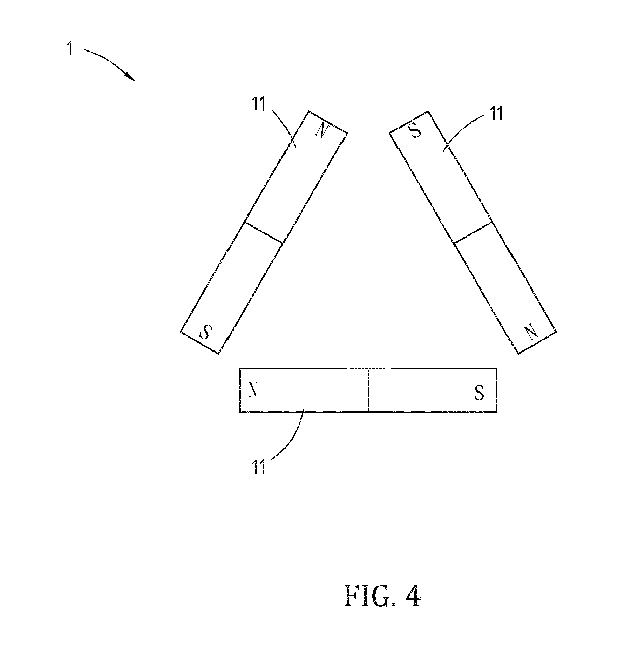

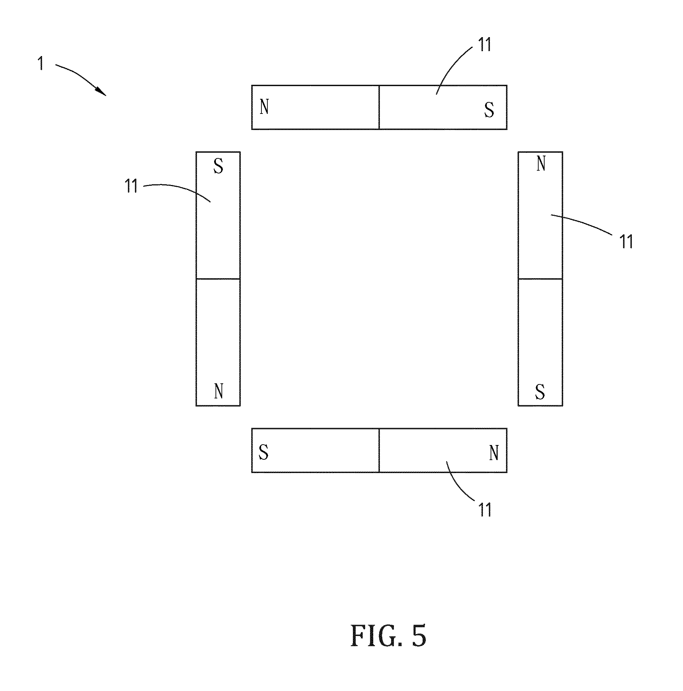

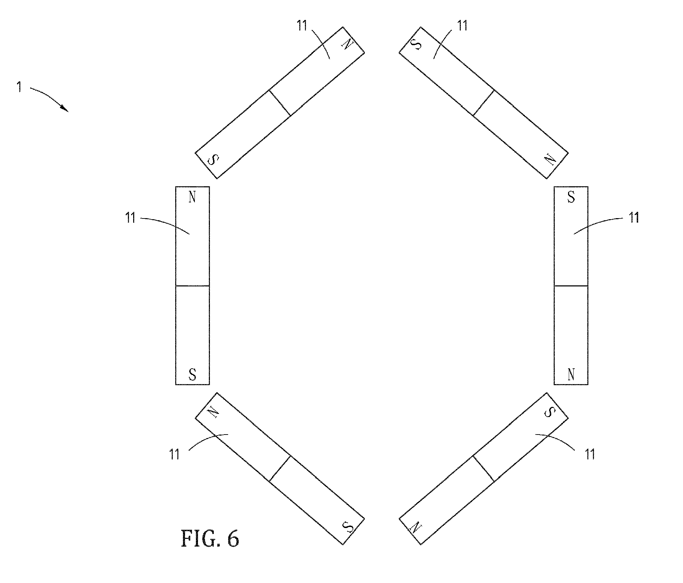

Referring to FIG. 4 to FIG. 6, FIG. 4 to FIG. 6 respectively illustrate top views of object positioning devices 1 having different arrangements of an object positioning system according to a second embodiment of the instant disclosure. The object positioning system in the embodiment is similar to that in the first embodiment. In this embodiment, two ends of each of the magnetic bars 11 are arranged to face, respectively, to the ends of two adjacent magnetic bars 11. The magnetic bars 11 are at a same plane and are arranged to form a marked magnetic field having a polygonal form. In an embodiment, as shown in FIG. 4, the magnetic bars 11 are arranged to form a marked magnetic field having a triangular form. In an embodiment, as shown in FIG. 5, the magnetic bars 11 are arranged to form a marked magnetic field having a quadrangular form. In an embodiment, as shown in FIG. 6, the magnetic bars 11 are arranged to form a marked magnetic field having a hexagonal form.

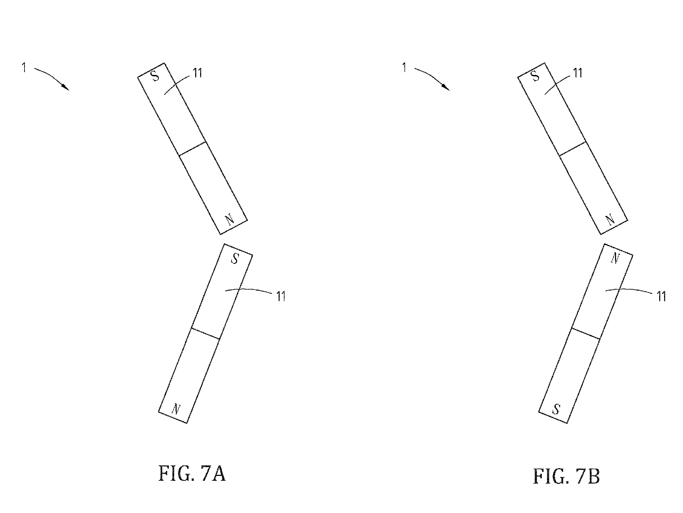

Referring to FIG. 7A and FIG. 7B, FIG. 7A and FIG. 7B respectively illustrate different arrangements of magnetic bars 11 of the object positioning device 1 of the object positioning system according to the second embodiment of the instant disclosure. In an embodiment, as shown in FIG. 7A, two adjacent poles of two adjacent magnetic bars 11 have different polarity (i.e., one is N pole, and the other one is S pole). In an embodiment, as shown in FIG. 7B, two adjacent poles of two adjacent magnetic bars 11 have the same polarity (i.e., both are N pole or both are S pole). In the embodiment, the two adjacent poles of the two adjacent magnetic bars 11 are both N pole.

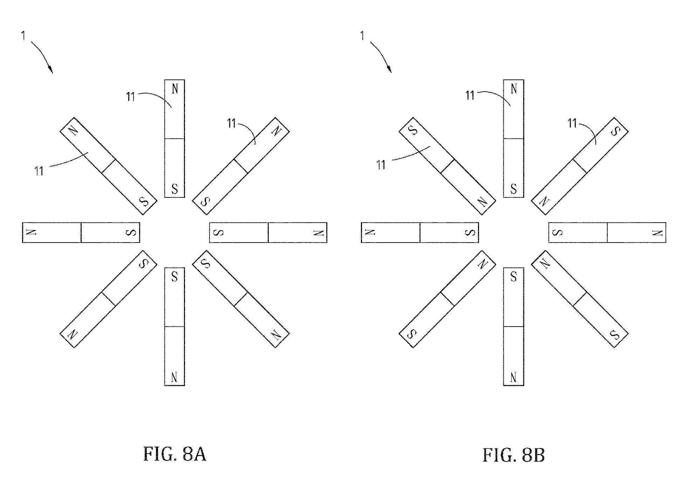

Referring to FIG. 8A and FIG. 8B, FIG. 8A and FIG. 8B respectively illustrate different arrangements of magnetic bars 11 of an object positioning device 1 of an object positioning system according to a third embodiment of the instant disclosure. The magnetic bars 11 are at a same plane and are arranged to form a marked magnetic field having a radial form and arranged in point symmetry. In an embodiment, as shown in FIG. 8A, one of the two poles of the magnetic bars 11 are in the inside, and the other ones are in the outside. In an embodiment, as shown in FIG. 8B, the magnetic bars 11 are arranged as a radiated structure. The radially and inwardly ends of the adjacent magnetic bars 11 have opposite poles. In other embodiment, a number of the magnetic bars 11 are set in a group. The radially and inwardly ends of the magnetic bars 11 in a same group have the same poles. The same poles of the magnetic bars 11 in the adjacent groups face toward opposite directions.

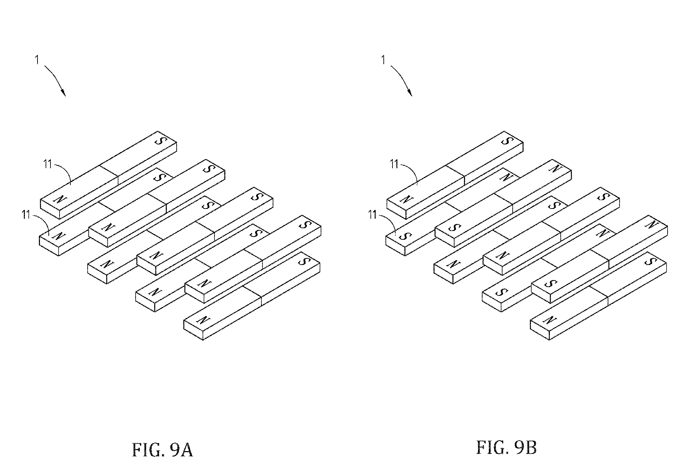

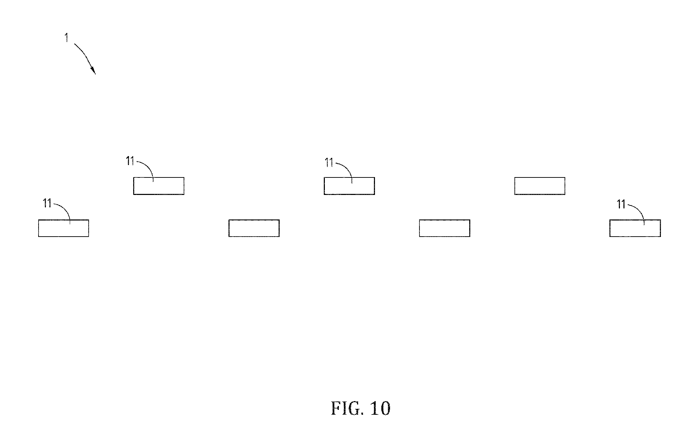

Referring to FIG. 9A, FIG. 9B, and FIG. 10, FIG. 9A and FIG. 9B respectively illustrate perspective views of object positioning devices 1 having different arrangements of an object positioning system according to a fourth embodiment of the instant disclosure. FIG. 10 illustrates a side view of the object positioning device 1 of the object positioning system according to the fourth embodiment of the instant disclosure. The difference between the first embodiment and the fourth embodiment is that the magnetic bars 11 of the embodiment are arranged in a three-dimensional form, which can have more variations of arrangements of magnetic fields and magnetic lines of force. In an embodiment, as shown in FIG. 9A, the object positioning device 1 comprises a plurality of magnetic bars 11. The magnetic bars 11 are arranged in a space and to form a marked magnetic field having a three-dimensional form. The three-dimensional marked magnetic field can be arranged in a geometric form. The magnetic bars 11 are enclosed by clothes or other filling materials. The same poles of the magnetic bars 11 face toward the same direction. In an embodiment, as shown in FIG. 9B, the same poles of adjacent magnetic bars 11 face toward opposite directions. In another embodiment, a number of adjacent magnetic bars 11 are set in a group. The same poles of the magnetic bars 11 in a same group face toward the same direction. The interval can, but not limited to, be formed by filling clothes or other filling materials.

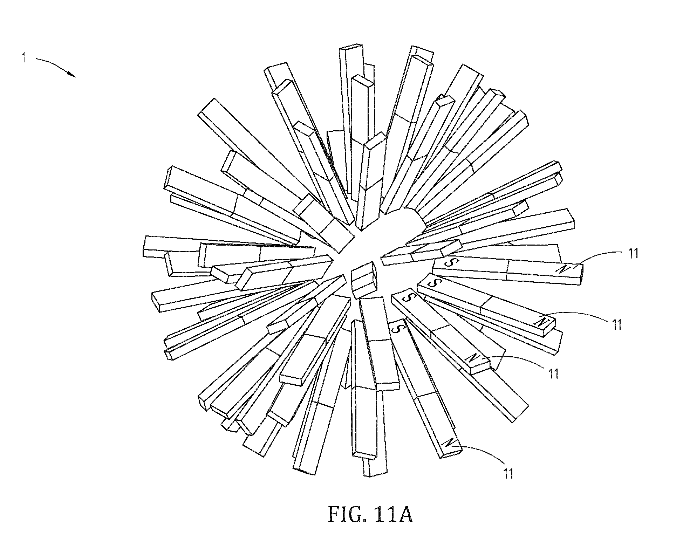

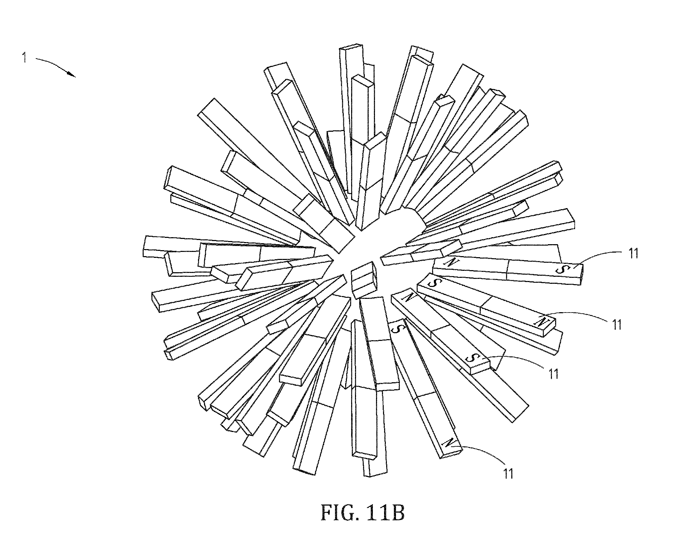

Referring to FIG. 11A and FIG. 11B, FIG. 11A and FIG. 11B respectively illustrate different arrangements of magnetic bars 11 of object positioning devices 1 of an object positioning system according to a fifth embodiment of the instant disclosure. The magnetic bars 11 can be arranged in a space and to form a marked magnetic field having a radial form and arranged in point symmetry. In an embodiment, as shown in FIG. 11A, one of the two poles of the magnetic bars 11 are in the inside, and the other ones are in the outside. In an embodiment, as shown in FIG. 11B, the magnetic bars 11 are arranged as a radiated structure. The radially and inwardly ends of the adjacent magnetic bars 11 have opposite poles. In another embodiment, a number of adjacent magnetic bars 11 are set in a group. The radially and inwardly ends of the magnetic bars 11 in a same group have the same poles. The same poles of the magnetic bars 11 in the adjacent groups face toward opposite directions.

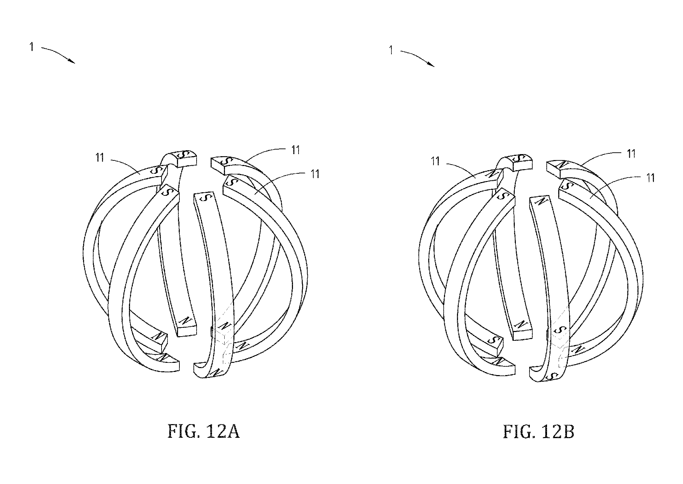

Referring to FIG. 12A and FIG. 12B, FIG. 12A and FIG. 12B respectively illustrate different arrangements of object positioning devices 1 of an object positioning system according to a sixth embodiment of the instant disclosure. The magnetic bars 11 can be arranged in a space and to form a marked magnetic field having a spherical form and arranged in point symmetry. In an embodiment, as shown in FIG. 12A, the upper ends of the magnetic bars 11 have same poles (i.e., the S poles), and the lower ends of the magnetic bars 11 have same poles (i.e., the N poles) opposite to those of the upper ends. In an embodiment, as shown in FIG. 12B, the upper ends of the adjacent magnetic bars 11 have opposite poles. In another embodiment, a number of adjacent magnetic bars 11 are set in a group. The same poles of the magnetic bars 11 in a same group face toward the same direction. The same poles of the magnetic bars 11 in the adjacent group face toward opposite directions.

While the instant disclosure has been described by way of example and in terms of the preferred embodiments, it is to be understood that the instant disclosure needs not be limited to the disclosed embodiments. For anyone skilled in the art, various modifications and improvements within the spirit of the instant disclosure are covered under the scope of the instant disclosure. The covered scope of the instant disclosure is based on the appended claims.

## Claims

1. An object positioning system comprising:
an object positioning device (1) comprising at least a magnetic bar forming a marked magnetic field; and
a detecting device (2) comprising:
a magnetic field generating unit (21) outputting a detecting magnetic field according to a detecting signal in an electromagnetic conversion process; and
an analyzing unit (22) detecting whether the detecting signal varies when the detecting magnetic field passes the marked magnetic field along a moving direction, the analyzing unit (22) analyzing whether a character of the variation of the detecting signal corresponds to the marked magnetic field and accordingly outputting a detecting result.

2. The object positioning system of claim 1, wherein the magnetic bars (11) are arranged in a geometric form.

3. The object positioning system of claim 1, wherein the magnetic bars (11) are arranged in point symmetry, and a plurality of magnetic lines of force of the marked magnetic field is symmetric.

4. The object positioning system of claim 1, wherein the detecting device (2) further comprises an output unit (23) electrically connected to the analyzing unit (22) for outputting a sound, a light signal, or a displayed massage according to the detecting result.

5. The object positioning system of claim 1, wherein the magnetic bars (11) are arranged in a radial form, one of the two poles of the magnetic bars (11) are in the inside, and the other one of the two poles of the magnetic bars (11) are in the outside.

6. The object positioning system of claim 1, wherein the magnetic bars (11) are arranged in a three-dimensional form.

7. An object positioning device (1) utilized for matching a detecting device (2) capable of generating a detecting magnetic field, the object positioning device (1) comprising:
at least a magnetic bar forming a marked magnetic field;
wherein the detecting device (2) passes the marked magnetic field along a moving direction and detects a variation of a detecting signal, and the detecting device (2) analyzes a character of the variation of the detecting signal and accordingly outputs a detecting result.

8. The object positioning device (1) of claim 7, wherein the magnetic bars (11) are arranged in point symmetry, and a plurality of magnetic lines of force of the marked magnetic field are symmetric.

9. The object positioning device (1) of claim 7, wherein the magnetic bars (11) are arranged in a radial form, one of the two poles of the magnetic bars (11) are in the inside, and the other one of the two poles of the magnetic bars (11) are in the outside.

10. The object positioning device (1) of claim 7, wherein the magnetic bars (11) are arranged in a three-dimensional form.

11. An object positioning system comprising:
an object positioning device (1) comprising at least a magnetic bar forming a marked magnetic field; and
a detecting device (2) comprising an analyzing unit (22) for detecting the marked magnetic field and accordingly outputting a detecting result.

12. The object positioning system of claim 11, wherein the magnetic bars (11) are arranged in a geometric form.

13. The object positioning system of claim 11, wherein the magnetic bars (11) are arranged in point symmetry, and a plurality of magnetic lines of force of the marked magnetic field is symmetric.

14. The object positioning system of claim 11, wherein the magnetic bars (11) are arranged in a radial form, one of the two poles of the magnetic bars (11) are in the inside, and the other one of the two poles of the magnetic bars (11) are in the outside.

15. The object positioning system of claim 11, wherein the magnetic bars (11) are arranged in a three-dimensional form.
